(19) Europäisches Patentamt European Patent Office Office européen des brevets

(11) **EP 2 112 129 B1**

(12) **EUROPEAN PATENT SPECIFICATION**

(45) Date of publication and mention
of the grant of the patent:
**07.08.2013 Bulletin 2013/32**

(51) Int Cl.:
*C04B 28/24* (2006.01)     *C04B 35/565* (2006.01)
*C04B 35/63* (2006.01)     *C04B 35/80* (2006.01)
*C04B 37/00* (2006.01)     *C04B 38/00* (2006.01)
*B01D 46/24* (2006.01)

(21) Application number: **08711190.2**

(22) Date of filing: **13.02.2008**

(86) International application number:
**PCT/JP2008/052332**

(87) International publication number:
**WO 2008/099844 (21.08.2008 Gazette 2008/34)**

(54) **JOINED BODY AND PROCESS FOR PRODUCING THE SAME**

VERBUNDENER KÖRPER UND HERSTELLUNGSVERFAHREN DAFÜR

CORPS ASSEMBLÉ ET PROCÉDÉ DE PRODUCTION DE CELUI-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.02.2007   JP 2007033025**

(43) Date of publication of application:
**28.10.2009   Bulletin 2009/44**

(73) Proprietor: **NGK Insulators, Ltd.**
**Nagoya-shi, Aichi 467-8530 (JP)**

(72) Inventor: **TOMITA, Takahiro**
**Nagoya-shi**
**Aichi 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**WO-A1-2006/098191     JP-A- 2004 262 669**

**Description**

Technical Field

The present invention relates to a joined body and a manufacturing method of the joined body.

Background Art

Heretofore, as a method for collecting and removing a particulate matter included in a dust-containing fluid such as an exhaust gas discharged from a diesel engine or the like, there is known the use of a honeycomb structure in which partition walls of through channels have a filter ability, and predetermined through channels have ends being plugged on one side whereas the remaining through channels have ends being plugged on the other side (see Patent Document 1).

When such a honeycomb structure is used as a filter for collecting the particulate matter from the exhaust gas, it is necessary to perform a regeneration treatment for burning off remaining carbon microparticles. At this time, a local temperature rise cannot be avoided, and hence there is present the problem that a high thermal stress and cracking are easily generated. In a case where the honeycomb structure satisfies at least one of conditions that the Young's modulus of the material of a bonding layer is 20% or less of the Young's modulus of the material of a honeycomb segment and that the strength of the material of the bonding layer is smaller than that of the material of the honeycomb segment, the honeycomb structure can be prevented from being cracked and can obtain durability. Moreover, a honeycomb structure is disclosed in which a temperature difference is not easily made between the center of the honeycomb segment and the outer peripheral portion thereof. The pressure loss of the fluid is only small, and time and energy necessary for the rise of the temperature during the regeneration treatment can be decreased (see Patent Document 1).

However, it has been found that in a case where the honeycomb structure disclosed in Patent Document 1 is used as a catalyst carrier, the porosity of a porous ceramic member needs to be increased so as to load a large amount of catalyst. When the porosity of the porous ceramic member is increased, the strength of the member might decrease. In consequence, a honeycomb structure is disclosed which satisfies conditions that the percentage (the Young's modulus of the bonding layer/the Young's modulus of the porous ceramic member) of the ratio of the Young's modulus of the bonding layer with respect to the Young's modulus of the porous ceramic member exceeds 20% and that the porous ceramic member has a porosity of 20 to 80%. Even when vibration, bend or tensile stress is applied to the honeycomb structure, the breakage of the structure does not easily occur (see Patent Document 2).

Furthermore, a filter structure for an exhaust gas is disclosed in which the honeycomb structure includes a strong bond zone and a weak or zero bond zone, whereby the thermal stress is buffered, and the crack is guided to the weak or zero bond zone. Consequently, even when the breakage of a bonding portion occurs, a filter block does not move in a longitudinal direction (see Patent Document 3).

Patent Document 1: JP-A-2001-190916
Patent Document 2: JP-A-2004-188278
Patent Document 3: JP-A-2006-522267

The decrease of the Young's modulus of a joining material is effective for buffering the generated thermal stress or thermal strain. However, the strength of the joining material also decreases, and hence a problem is present that a joined body having a sufficient strength cannot be obtained.

Moreover, when a high porosity is obtained to decrease the Young's modulus, pores are easily concentrated near the center of the bonding layer, and the breakage of the corresponding portion easily occurs. There is a problem that the crack linearly progresses, whereby the breakage of the joining material occurs, and a joining target is crushed into small pieces.

An object of the present invention is to control the progress of the crack so that the breakage of the joined body is prevented and to provide a joined body in which a broken portion is controlled, and a manufacturing method of the jointed body.

EP-A-1591431 discloses a ceramic honeycomb structure body in which a plurality of porous honeycomb segments are bonded to each other with an adhesive layer. A plurality of protrusion portions are fixed to one of the adhesion surfaces.

WO 2006/098191 discloses a honeycomb structure in which a plurality of honeycomb segments are bonded by a bonding material layer. The porosity of an outer side portion of the bonding material layer is smaller than the porosity of a centre portion of the bonding material layer.

Disclosure of the Invention

To achieve the above object, the present inventors have found a joined body in which the porosity of a bonding layer is changed to control a cracked portion. That is, according to the present invention, a joined body is provided as set out in claim 1, and a manufacturing method of the jointed body is provided as set out in claim 14.

Preferably, when the bonding layer has a thickness t, the bonding layer having a thickness of 0.5t from an interface between the first joining target and the bonding layer in the zone a is a bonding layer aα, the bonding layer having a thickness of 0.5t from the bonding layer aα to the second joining target is a bonding layer aβ, the bonding layer having a thickness of 0.5t from an interface between the first joining target and the bonding layer in the zone b is a bonding layer bα, the bonding layer having a thickness of 0.5t from the bonding layer bα to the second joining target is a bonding layer bβ, the bonding layers of the zone a have a relation of $\varepsilon a1/\varepsilon a2 \geq 1.05$, in which $\varepsilon a1$ is the porosity of the bonding layer aα and $\varepsilon a2$ is the porosity of the bonding layer aβ, and the bonding layers of the zone b have a relation of $\varepsilon b1/\varepsilon b2 < 0.95$, in which $\varepsilon b1$ is the porosity of the bonding layer bα and $\varepsilon b2$ is the porosity of the bonding layer bβ.

Preferably, the zones of the bonding layer have a relation of $0 \leq Sc/(Sa+Sb+Sc) < 0.8$, in which Sa, Sb and Sc are the areas of the bonding interfaces of the zones a, b and c.

Preferably, the areas Sa and Sb of the bonding interfaces have a relation of $0.3 < Sa/(Sa+Sb) < 0.7$.

Preferably, the bonding layer is not constituted of only one of the zone a and the zone b but has a repeated constitution including one or more combination sets, each set being constituted of the adjacent zones a and b.

Preferably, the zone a and the zone b are repeatedly arranged in the bonding layer.

Preferably, the zone a and the zone b in thebonding layer include a repeated arrangement in which the zones are repeated in a direction vertical to the long-side direction of the bonding interface.

Preferably, the zone a and the zone b in a bonding face include a repeated arrangement in which the zones are repeated in a direction parallel to the long-side direction of the bonding interface.

Preferably, the zone a and the zone b in the bonding layer include a checkered-pattern-like repeated arrangement.

Preferably, when the zone a and the zone b are repeatedly arranged, the width of the repeating direction of the zone a and the zone b is 1/3 or less of the short side of the bonding interface.

Preferably, in the repeated arrangement constituting the checkered pattern, the length of one side of each of the zone a and the zone b is 1/3 or less of the short side of the bonding interface.

Preferably, the inorganic adhesive contains colloidal silica.

Preferably, the inorganic particles contain at least one of plate-like particles and fibrous particles.

The joined body is preferably used for the purification of a diesel exhaust gas.

In the manufacturing method of the joined body, Preferably to form the zone a, a part of the bonding interface of the second joining target is coated with a pH regulator as the hardening accelerator, and to form the zone b, a part of the bonding interface of the first joining target is coated with the pH regulator as the hardening accelerator.

Preferably, the pH regulator is citric acid.

The bonding layer includes a low porosity portion and a high porosity portion, and the positions of the portions are controlled, whereby the progressing site of a crack generated in the high porosity portion of the bonding layer is guided into the high porosity portion. The crack is inflected in the high porosity portion so that the crack does not progress to the low porosity portion, whereby the progress of the crack is controlled only in the high porosity portion, and the breakage of the bonding layer scarcely occurs.

The bonding interface between the first joining target and the second joining target with the bonding layer is bonded by the bonding layer with a sufficient strength. Therefore, even when a stress is applied to the joined body, the stress is not concentrated on the bonding interface. Even when cracks are generated, the cracks are controlled so as to gather in the high porosity portion, and the cracks do not progress to the low porosity portion, whereby the breakage does not easily occur.

Brief Description of the Drawings

Fig. 1 is a schematic diagram showing zones in a joined body;
Fig. 2 is a schematic sectional view showing the zones of the joined body and a bonding face;
Fig. 3 is a schematic diagram showing one example of a coating pattern in a zone a and a zone b of a bonding layer;
Fig. 4 is a schematic diagram showing another example of the coating pattern in the zone a and the zone b of the bonding layer;
Fig. 5 is a schematic diagram showing still another example of the coating pattern in the zone a and the zone b of the bonding layer;

Fig. 6 is a schematic diagram showing a further example of the coating pattern in the zone a and the zone b of the bonding layer;

Fig. 7 is a diagram showing one example of the coating pattern of honeycomb segments;

Fig. 8 is a diagram showing another example of the coating pattern of the honeycomb segments;

Fig. 9 is a diagram showing still another example of the coating pattern of the honeycomb segments;

Fig. 10 is a diagram showing a further example of the coating pattern of the honeycomb segments;

Fig. 11 is a diagram showing a further example of the coating pattern of the honeycomb segments;

Fig. 12 is a diagram showing a further example of the coating pattern of the honeycomb segments;

Fig. 13 is a diagram showing a still further example of the coating pattern of the honeycomb segments; and

Fig. 14 is a schematic diagram showing a honeycomb structure.

Description of Reference Numerals

1: joined body, 2: honeycomb segment, 3: honeycomb structure, 10: first joining target, 11: second joining target, 12: bonding layer, 12a: zone a, 12b: zone b, 12c: zone c, 20: bonding layer a$\alpha$, 21: bonding layer a$\beta$, 22: bonding layer b$\alpha$, 23: bonding layer b$\beta$, 24: bonding layer c$\alpha$, and 25: bonding layer c$\beta$.

Best Mode for Carrying out the Invention

Hereinafter, an embodiment of the present invention will be described, but the present invention is not limited to the following embodiment, and the present invention can be altered, modified or improved without departing from the scope of the present invention.

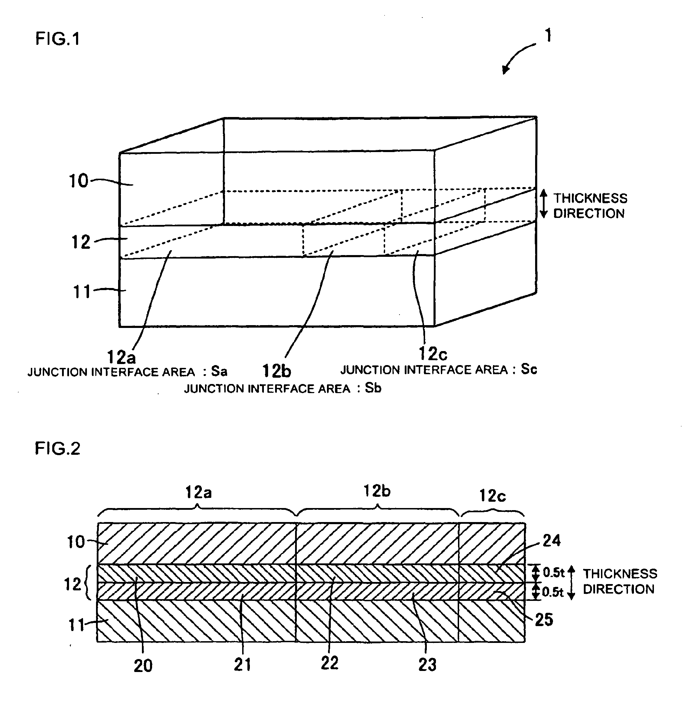

Fig. 1 shows one embodiment of a joined body 1 in which a broken portion can be controlled in the present invention. A bonding layer 12 is present which is disposed between a first joining target 10 and a second joining target 11 to join the first joining target 10 and the second joining target 11. The bonding layer 12 includes a zone a 12a in which a porosity on the side of the first joining target 10 is higher than that on the side of the second joining target 11 in a thickness direction, and a zone b 12b in which the porosity on the side of the second joining target 11 is higher than that on the side of the first joining target 10 in the thickness direction. The zones a 12a and b 12b are arranged in a direction vertical to the thickness direction. The bonding layer may be provided with a zone c 12c which does not have the characteristics of the zones a 12a and b 12b.

Fig. 2 shows a schematic sectional view of the joined body 1. When the bonding layer 12 has a thickness t, the bonding layer having a thickness of 0.5t from an interface between the first joining target 10 and the bonding layer 12 in the zone a 12a is a bonding layer a$\alpha$ 20, and the bonding layer having a thickness of 0.5t from the bonding layer a$\alpha$ 20 to the second joining target 11 is a bonding layer a$\beta$ 21. Moreover, the bonding layer having a thickness of 0.5t from an interface between the first joining target 10 and the bonding layer 12 in the zone b 12b is a bonding layer b$\alpha$ 22, and the bonding layer having a thickness of 0.5t from the bonding layer b$\alpha$ to the second joining target 11 is a bonding layer b$\beta$ 23. Furthermore, the bonding layer having a thickness of 0.5t from an interface between the first joining target 10 and the bonding layer 12 in the zone c 12c is a bonding layer c$\alpha$ 24, and the bonding layer having a thickness of 0.5t from the bonding layer c$\alpha$ 24 to the second joining target 11 is a bonding layer c$\beta$ 25. Moreover, the layers are formed so as to have a relation of $\varepsilon a1/\varepsilon a2 \geq 1.05$, in which $\varepsilon a1$ is the porosity of the bonding layer aa 20 and $\varepsilon a2$ is the porosity of the bonding layer a$\beta$ 21 in the zone a 12a and so as to have a relation of $\varepsilon b1/\varepsilon b2 < 0.95$, in which $\varepsilon b1$ is the porosity of the bonding layer b$\alpha$ 22 and $\varepsilon b2$ is the porosity of the bonding layer b$\beta$23 in the zone b 12b. Moreover, the layers may be formed so as to have a relation of $0 \leq Sc/(Sa+Sb+Sc) < 0.8$, in which Sa, Sb and Sc are the areas of the bonding interfaces of the zone a 12a, the zone b 12b and the zone c 12c in the bonding layer 12.

Furthermore, in the joined body 1 formed so that the areas Sa, Sb and Sc of the bonding interfaces have a relation of $0 \leq Sc/(Sa+Sb+Sc) < 0.8$ and $0.3 < Sa/(Sa+Sb) < 0.7$, the areas Sa and Sb are at least 20% of the area of the bonding interface, and the progress of the crack can be controlled. Moreover, in the areas Sa and Sb of the zone a and the zone b, the ratio of Sa is set to 30 to 70%, whereby even when the crack is generated in a high porosity portion of the zone a owing to quick heating, the crack does not advance straight to a low porosity portion of the zone b. The crack is inflected and progresses only in the high porosity portion of the zone, whereby the progress of the crack can be controlled, and the broken portion can be controlled.

The bonding layer 12 includes the low porosity portion and the high porosity portion, and the positions of the portions are controlled, whereby the progressing site of the crack generated in the high porosity portion of the bonding layer 12 is guided into the high porosity portion. Moreover, the crack is inflected in the high porosity portion so that the crack does not progress to the low porosity portion, whereby the progress of the crack is controlled only in the high porosity portion. In consequence, the breakage of the bonding layer 12 scarcely occurs.

The bonding layer 12 is obtained by hardening a joining material composition containing inorganic particles and an inorganic adhesive as main components. Examples of the inorganic adhesive include colloidal silica (silica sol), colloidal alumina (alumina sol), various types of another metal oxide sol, ethyl silicate, water glass, silica polymer, and aluminum phosphate. Moreover, examples of the inorganic particles include plate-like particles, fibrous particles and spherical particles, and specific examples of the material of the particles include alumina, silica, mullite, zirconia, silicon carbide, silicon nitride, aluminum nitride, glass, mica, talc and boron nitride. As a hardening accelerator for a joining material, a multicharged ion salt (e.g., aluminum salt), an inorganic acid, an organic acid or the like is used. However, the joining material brought close to a portion coated with the hardening accelerator becomes a comparatively dense joining material owing to the function of the hardening accelerator. Therefore, when a position coated with the hardening accelerator is controlled, the coarseness/denseness of the density of the joining material can be controlled in the bonding layer 12. The porosity of the bonding layer 12 is controlled to obtain the joined body 1.

To form the zones a 12a and b 12b, a manufacturing method is used in which the first joining target 10 or the second joining target 11 is beforehand coated with the hardening accelerator for accelerating the hardening of the joining material composition, whereby the joined body 1 can be obtained in which the broken portion can be controlled by the porosity of the bonding layer 12.

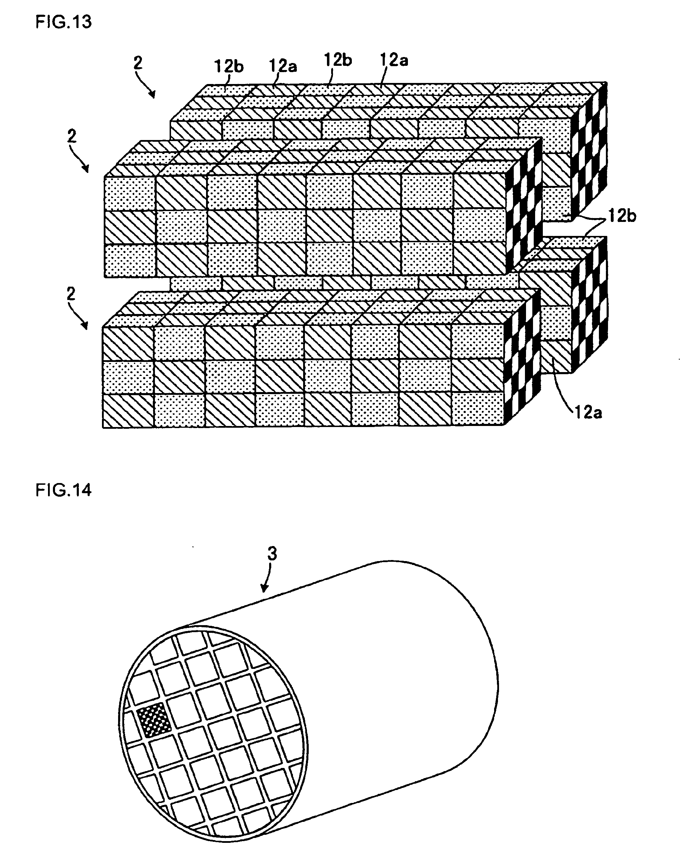

Moreover, to form the zones a 12a and b 12b, the first joining target 10 or the second joining target 11 may beforehand be coated with the hardening accelerator for accelerating the hardening of the joining material composition. According to such a manufacturing method, the broken portion can be controlled by the porosity of the bonding layer 12 in a honeycomb structure 3 obtained by using honeycomb segments (joined bodies) as constituents. Fig. 14 shows a schematic diagram of the honeycomb structure 3. Honeycomb segments 2 are bonded together by the joining material to form the honeycomb structure 3.

In the joined body 1 prepared by a manufacturing method characterized in that to form the zone a 12a, a part of the bonding face of the second joining target 11 is coated with a pH regulator as the hardening accelerator, and to form the zone b 12b, a part of the bonding face of the first joining target 10 is coated with the pH regulator as the hardening accelerator, the broken portion can be controlled by the difference of the porosity of the bonding layer 12.

Moreover, in the honeycomb structure 3 prepared by the manufacturing method characterized in that to form the zone a 12a, a part of the bonding face of the second joining target 11 is coated with the pH regulator as the hardening accelerator, and to form the zone b 12b, a part of the bonding face of the first joining target 10 is coated with the pH regulator as the hardening accelerator, the broken portion can be controlled by the difference of the porosity of the bonding layer 12.

To prepare the joining material, a mixture of the inorganic particles of silicon carbide and mica, colloidal silica as the inorganic adhesive, bentonite, an organic pore former, an organic binder and a dispersant is further mixed with water, and kneaded by a mixer, to obtain a paste-like joining material composition, and at this time, the amount of the water to be added is regulated so that a paste viscosity is in a range of 20 to 60 Pa•s. To prepare a further preferable joining material, a mixture of the inorganic particles of silicon carbide, aluminosilicate fiber, colloidal silica as an inorganic adhesive, bentonite, an organic pore former, an organic binder and a dispersant is further mixed with water, and kneaded by a mixer, to obtain a paste-like joining material composition, and at this time, the amount of the water to be added is regulated so that the paste viscosity is in a range of 20 to 60 Pa•s.

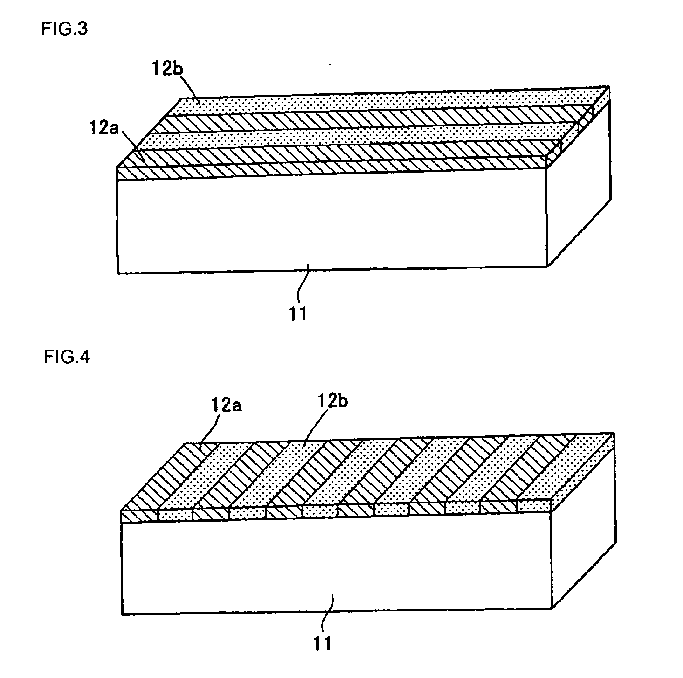

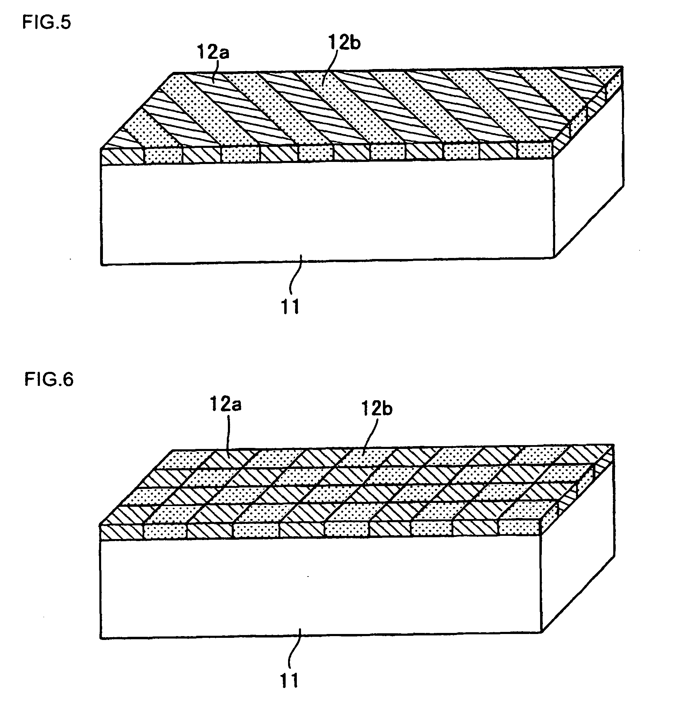

In the bonding layer 12, the zones a 12a and b 12b are not constituted of one zone where the respective zones come in contact with each other but are constituted of two or more dependent zones, and the zones a 12a and b 12b may alternately be arranged in a striped-pattern-like arrangement. Figs. 3 to 6 show one example in which the zones a 12a and b 12b are alternately arranged in the striped-pattern-like arrangement. Fig. 3 shows one example of the striped-pattern-like arrangement in which the zones a 12a and b 12b are repeatedly arranged in a direction parallel to a long side. Fig. 4 shows an example of the striped-pattern-like arrangement in which the zones a 12a and b 12b are repeatedly arranged in a direction vertical to the long side. Fig. 5 shows an example of the striped-pattern-like arrangement in which the zones a 12a and b 12b are repeatedly arranged obliquely at an angle of 1 to 89 degrees with respect to the long side. As long as the zones a 12a and b 12b are alternately arranged, an arbitrary angle can be set in the range of 1 to 89 degrees, to form a striped pattern. Fig. 6 shows an example of arrangement in which the zones a 12a and b 12b are alternately arranged in a checkered or lattice-like pattern in the bonding layer 12. As described above, when the zones a 12a and b 12b are alternately arranged, the joined body 1 can be formed in which the broken portion is controlled by the difference of the porosity.

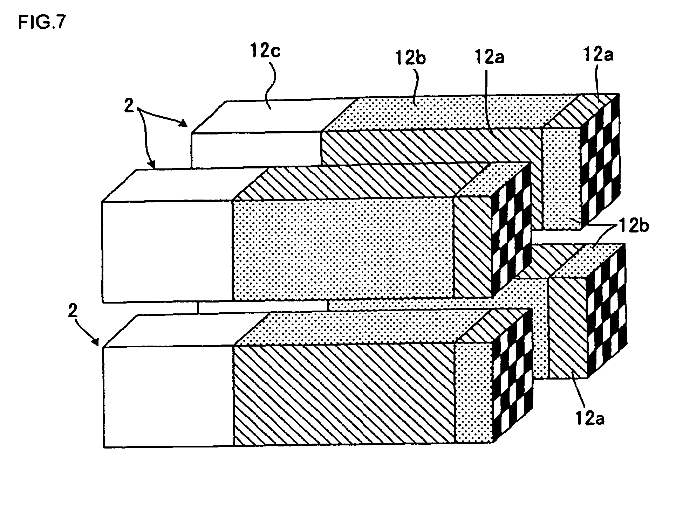

Fig. 7 shows a part of the constitution of the honeycomb structure 3 formed by stacking the honeycomb segments 2. The structure is formed of the zone a 12a, the zone b 12b and the zone c 12c. The zones a 12a and b 12b are alternately arranged in the surface of the honeycomb segment 2, and are alternately bonded to the other honeycomb segment 2. By this bonding method, even when crack is generated in the bonding layer 12, the crack stays in the zone a 12a and does not progress to the zone b 12b, whereby the breakage of the joined honeycomb segments 2, that is, the honeycomb structure 3 does not occur. In the coating pattern of Fig. 7, the zone c 12c occupies 1/3 of the honeycomb segment 2, and the zone a 12a occupies a ratio of 0.25 with respect to the total area of the zones a 12a and b 12b. The zone a 12a may be replaced with the zone b 12b, and the zone b 12b may have a ratio of 0.25. A ratio of Sa/(Sa+Sb) of this pattern is 0.25 or 0.75. This arrangement is a pattern used as the coating pattern of the joining material in Example 1 and Example 8 described later.

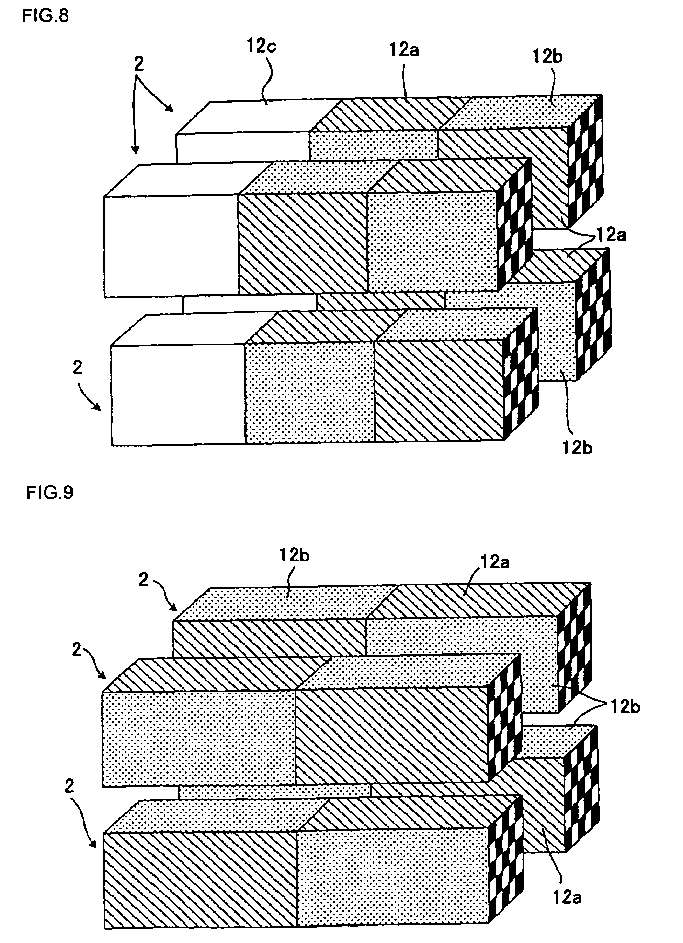

Fig. 8 shows a pattern in which the zone c 12c occupies 1/3 of the area of the bonding layer 12 of the honeycomb segment 2, and the zones a 12a and b 12b have an equal area. The ratio of Sa/(Sa+Sb) of this pattern is 0.5. This arrangement is a pattern used as the coating pattern of the joining material in Example 2 and Example 9 described later.

Fig. 9 shows a case where the honeycomb segment 2 does not have the zone c 12c, and the zones a 12a and b 12b have an equal area. In each honeycomb segment 2, the zones a 12a and b 12b are alternately arranged and bonded. The ratio of Sa/(Sa+Sb) of this pattern is 0.5. This arrangement is a pattern used as the coating pattern of the joining material in Example 3 and Example 10 described later.

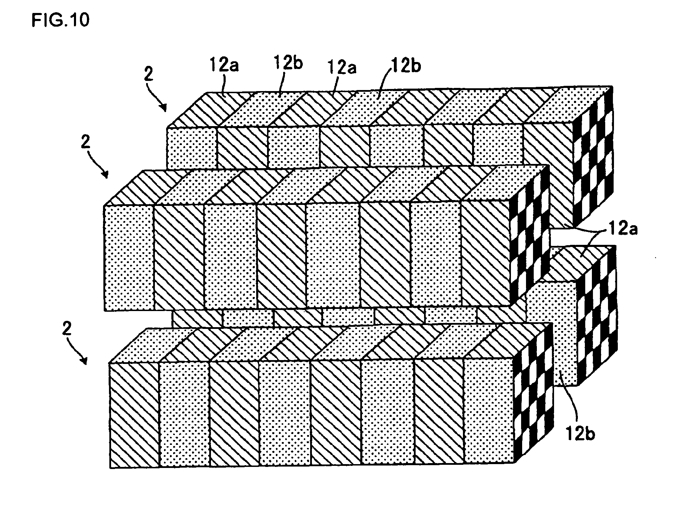

Fig. 10 shows an example in which the area of the bonding layer 12 of the honeycomb segment 2 is divided into eight equal portions, and the zones a 12a and b 12b are alternately arranged. Since the area is divided into the eight equal portions, the area of one zone a 12a has a ratio of 0.125 with respect to the length of a short side. The ratio of Sa/(Sa+Sb) of this pattern is 0.5. This arrangement is a pattern used as the coating pattern of the joining material in Example 4 and Example 11 described later.

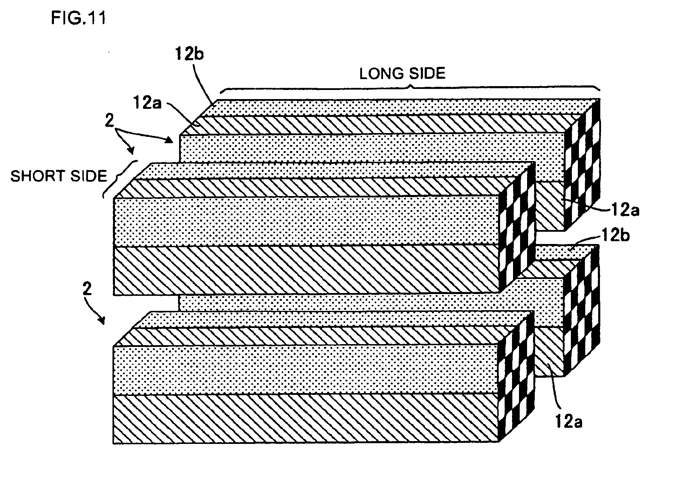

Fig. 11 is a diagram of a case where the zone c 12c is not disposed, and the zones a 12a and b 12b are arranged in parallel with the long side of the honeycomb segment 2. The zones a 12a and b 12b are repeatedly arranged, each zone having a length of a half of the length of a short side. The ratio of Sa/(Sa+Sb) of this pattern is 0.5. This arrangement is a pattern used as the coating pattern of the joining material in Example 5 and Example 12 described later.

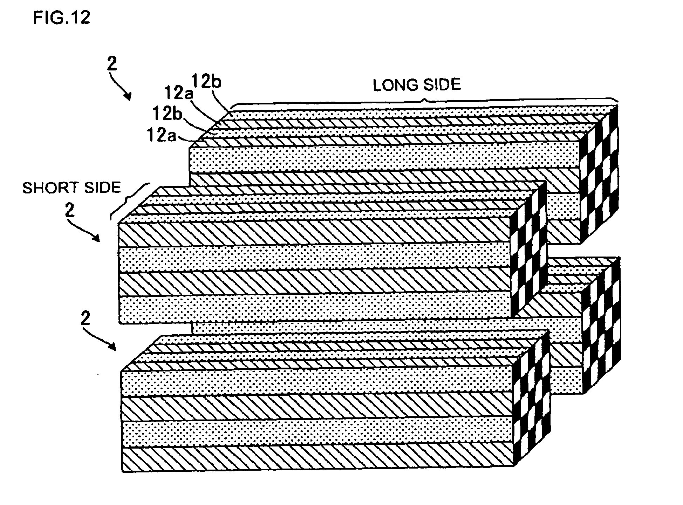

Fig. 12 is a diagram of a case where the honeycomb segment 2 does not have the zone c 12c, and the zones a 12a and b 12b are repeatedly alternately arranged in parallel with the long side of the honeycomb segment 2 at an interval of 1/4 of the length of the short side. The ratio of Sa/(Sa+Sb) of this pattern is 0.5. This arrangement is a pattern used as the coating pattern of the joining material in Example 6 and Example 13 described later.

Fig. 13 is a diagram of a case where the length of each of the zones a 12a and b 12b of the honeycomb segment 2 is 1/3 of the length of the short side, and a length vertical to the long side is 1/8 of the length of the long side. The zones a 12a and b 12b are alternately arranged. The zone c 12c is not present. The ratio of Sa/(Sa+Sb) of this pattern is 0.5. This arrangement is a pattern used as the coating pattern of the joining material in Example 7 and Example 14 described later.

In a coating pattern 9 shown in Fig. 9, a coating pattern 10 shown in Fig. 10 and a coating pattern 13 shown in Fig. 13, the coating pattern of the joining material becomes fine, and a large number of zones b 12b having a small porosity and a high strength are scattered, whereby the crack does not easily progress. A further preferable coating pattern is the coating pattern 10 or 13. When the zones a 12a and b 12b are arranged in the checkered pattern, the crack further does not easily progress.

The honeycomb structure 3 as the joined body 1 constituted of the first and second joining targets as the honeycomb segments 2 can be utilized as a filter for the purification of a diesel exhaust gas, because the broken portion can be controlled.

In the manufacturing method in which citric acid as one type of organic acid is used as the pH regulator for use in the manufacturing method of the joined body 1 and the honeycomb structure 3 capable of controlling the broken portion, it is possible to obtain the joined body 1 and the honeycomb structure 3 in which a pH can easily be regulated.

A control method of the position of the high porosity portion is as follows. To harden the inorganic adhesive, in general, water is removed by drying, whereby the polymerization (agglomeration as the case may be) of an inorganic adhesive component is accelerated. The hardening gradually proceeds, and hence a certain degree of time is required for the hardening. In the present invention, the surface of the joining target is coated with a substance (the hardening accelerator) which exerts a catalytic function on the inorganic adhesive and which accelerates the polymerizing reaction or agglomeration of the adhesive even in the presence of the water, and hence the hardening locally proceeds after the joining without waiting for the drying.

The joining material which comes close to the surface of the first joining target coated with the hardening accelerator becomes a comparatively dense joining material owing to the function of the hardening accelerator. At this time, the facing face of the second joining target is not coated with the hardening accelerator, and hence the joining material which comes close to this face does not receive the function of the hardening accelerator but becomes a comparatively coarse joining material. Therefore, the bonding layer is formed in which the porosity varies in the thickness direction of the joining material. When the joining targets are alternately coated with the hardening accelerator or alternately joined to form the bonding layer, the coarseness/denseness of the porosity is controlled. Even when the joined body 1 is cracked, the progress of the crack can be controlled.

When the coating position with the hardening accelerator is controlled, the concentration of pores in the thickness direction of the joining material can be controlled in the bonding face, and the coarseness/denseness of the density of the porosity can be controlled in the bonding layer, whereby the joined body 1 can be obtained by the difference of the porosity.

Examples of the hardening accelerator include poly aluminum chloride having the function of an agglomeration agent, and aluminum sulfate, when the inorganic adhesive is colloidal silica. Moreover, examples of an agent for accelerating the agglomeration by pH regulation include various types of inorganic acids, an organic acid, and aqueous solution of bases such as ammonia and sodium hydrate.

As the pH regulator, urea or esters may be used because a reaction such as hydrolysis is caused at a predetermined temperature to form an acid or a base, besides the above various acids or bases.

Examples

A honeycomb segment 2 was prepared and tested by the following method. As the material of the honeycomb segment 2, SiC powder and metal Si powder were mixed at a mass ratio of 80:20, and a pore former, an organic binder, a surfactant and water were added to this mixture, to prepare a kneaded clay having plasticity. This clay was extruded and dried to obtain a formed honeycomb segment having a partition wall thickness of 310 $\mu$m, a cell density of about 46.5 cells/cm$^2$ (300 cells/square inch), a square sectional shape with one side of 35 mm, and a length of 178 mm. Both the end faces of cells of this formed ceramic filter body as the honeycomb segment were plugged so that the end faces of the body had a checkered pattern. That is, the ends of the cells were plugged so that the ends of the adjacent cells were plugged on opposite sides. As a plugging material, a material similar to a ceramic filter material was used. Both the end faces of the cells were plugged and dried, and the body was degreased in the atmosphere at about 400°C, and then fired in an argon inactive atmosphere at about 1450°C, thereby obtaining the honeycomb segment 2 having a porous structure in which SiC crystal particles were combined by Si.

To prepare a joining material 1, a mixture of 41 mass% of SiC fine particles, 16.5 mass% of SiC coarse particles, 22 mass% of mica, 20 mass% of colloidal silica, 0.5 mass% of bentonite, 1.5 mass% of organic pore former (superaddition), 0.4 mass% of organic binder (superaddition) and 0.04 mass% of dispersant (superaddition) was further mixed with water, and kneaded by a mixer for 30 minutes, to obtain a paste-like joining material composition. At this time, the amount of the water to be added was regulated so that a paste viscosity was in a range of 20 to 60 Pa•s.

To prepare a joining material 2, a mixture of 43 mass% of SiC fine particles, 35 mass% of aluminosilicate fiber, 21 mass% of colloidal silica, 1 mass% of bentonite, 1 mass% of organic pore former (superaddition), 0.4 mass% of organic binder (superaddition) and 0.04 mass% of dispersant (superaddition) was used in the same manner as in the joining material 1.

In Example 1, the bonding faces of two honeycomb segments were coated with an aqueous solution of 10 mass% of citric acid in a coating pattern shown in Fig. 7, and dried at room temperature. Afterward, the bonding face of the honeycomb segment was coated with the joining material 1 having a thickness of 1 mm in a coating direction, to form a joining material layer, and another honeycomb segment was disposed on the layer. This step was repeated to prepare a laminated honeycomb segment body including 16 honeycomb segments as a combination of 4 × 4, and a pressure or the like was appropriately applied from the outside to join the whole body, followed by drying at 140°C for 2 hours, thereby obtaining a honeycomb segment joined body. The outer periphery of the resultant honeycomb segment joined body was ground into a cylindrical shape, and the outer peripheral surface of the body was coated with a coating material, followed by drying and hardening at 700°C for 2 hours, thereby obtaining a honeycomb structure No. 1. It is to be noted that the area ratios of Sc/(Sa+Sb+Sc) and Sa/(Sa+Sb) of the face coated with citric acid at this time, that is, zones to form zones a 12a, b 12b and c 12c, respectively, are shown in Table 1.

[Table 1]

|  | Joined body No. | Joining material No. | Coating pattern | Sc/(Sa+Sb+Sc) | Sa/(Sa+Sb) | $\varepsilon a1/\varepsilon a2$ | $\varepsilon b1/\varepsilon b2$ | $\varepsilon c1/\varepsilon c2$ | Quick heating test |
|---|---|---|---|---|---|---|---|---|---|
| Example 1 | 1 | 1 | 7 | 0.33 | 0.25or0.75 | 1.12 | 0.92 | 1.01 | Δ |
| Example 2 | 2 | 1 | 8 | 0.33 | 0.5 | 1.15 | 0.90 | 1.01 | ○ |
| Example 3 | 3 | 1 | 9 | 0 | 0.5 | 1.10 | 0.91 | - | ○ |
| Example 4 | 4 | 1 | 10 | 0 | 0.5 | 1.11 | 0.91 | - | ◎ |
| Example 5 | 5 | 1 | 11 | 0 | 0.5 | 1.08 | 0.92 | - | Δ |
| Example 6 | 6 | 1 | 12 | 0 | 0.5 | 1.06 | 0.88 | - | Δ |
| Example 7 | 7 | 1 | 13 | 0 | 0.5 | 1.08 | 0.88 | - | ◎ |
| Example 8 | 8 | 2 | 7 | 0.33 | 0.25or0.75 | 1.09 | 0.90 | 1.02 | Δ |
| Example 9 | 9 | 2 | 8 | 0.33 | 0.5 | 1.10 | 0.92 | 1.01 | ○ |
| Example 10 | 10 | 2 | 9 | 0 | 0.5 | 1.16 | 0.89 | - | ◎ |
| Example 11 | 11 | 2 | 10 | 0 | 0.5 | 1.13 | 0.88 | - | ◎ |
| Example 12 | 12 | 2 | 11 | 0 | 0.5 | 1.11 | 0.89 | - | ○ |
| Example 13 | 13 | 2 | 12 | 0 | 0.5 | 1.08 | 0.93 | - | ○ |
| Example 14 | 14 | 2 | 13 | 0 | 0.5 | 1.06 | 0.88 | - | ◎ |
| Comparative Example 1 | 15 | 1 | - | 100 | - | - | - | 1.04 | × |
| Comparative Example 2 | 16 | 2 | - | 100 | - | - | - | 1.02 | × |

In Examples 2 to 7, honeycomb structure Nos. 2 to 7 were obtained in the same manner as in Example 1 except that coating patterns shown in Figs. 8 to 13 were used.

In Examples 8 to 14, honeycomb structure Nos. 8 to 14 were obtained in the same manner as in Examples 1 to 7 except that coating patterns shown in Figs. 7 to 13 were used and a bonding layer 12 was formed of a joining material 2.

In Comparative Examples 1 and 2, joined body Nos. 15 and 16 were obtained in the same manner as in the examples except that joining materials 1 and 2 were used and a honeycomb segment 2 was not coated with any hardening accelerator.

To confirm the zones a 12a, b 12b and c 12c during the measurement of properties, a portion including a joining material layer at a position to form the zone a 12a in the honeycomb structure was cut out into an arbitrary shape (e.g., $20 \times 10 \times 10$ mm), and impregnated with a resin. Afterward, a predetermined face was polished to obtain an observation face, whereby the section (a face vertical to the bonding face) of the joining material layer was observed. This face was observed by an electron microscope, and a pore portion in the section of the joining material layer was extracted. The joining material layer was divided into two equal portions in a joining thickness direction, and the porosities of the corresponding portions were calculated by image analysis, thereby obtaining $\varepsilon a1$ and $\varepsilon a2$. Similarly, the porosity of the section of the joining material layer at a position to form the zones b 12b and c 12c was calculated to obtain $\varepsilon b1$, $\varepsilon b2$ and $\varepsilon c1$, $\varepsilon c2$. The ratios of the porosities, that is, $\varepsilon a1/\varepsilon a2$, $\varepsilon b1/\varepsilon b2$ and $\varepsilon c1/\varepsilon c2$ are shown in Table 1.

To evaluate the honeycomb structure, the state of the resultant honeycomb structure after the joining was confirmed. Moreover, by the following method, a quick heating test (a burner spalling test) was performed at a test temperature of 900°C. The generating situation of the crack of the honeycomb structure after the test was observed. The results are shown in Table 1.

The burner spalling test (the quick heating test) was a test in which air heated by a burner was caused to flow through the honeycomb structure, to make a temperature difference between the center of the structure and an outer portion thereof, and a thermal shock resistance was evaluated in accordance with a temperature at which any crack was not generated in the honeycomb structure (as the temperature was high, the thermal shock resistance was high). It is to be noted that as to the indication of Table 1, a defect, that is, a cross means a state in which four or more cracks are present in the longitudinal direction of an outer peripheral portion along a bonding portion. A slight defect, that is, a triangle means that two or three cracks are present. A satisfactory result, that is, a circle means that one crack is present. An excellent result, that is, a double circle means that any crack is not generated.

As seen from Table 1, when the joining material No. 1 was used, in Example 1 (the coating pattern 7), Example 5 (the coating pattern 11) and Example 6 (the coating pattern 12), the quick heating test indicated the slight defect, that is, the triangle. When the joining material No. 2 was used, in Example 8 (the coating pattern 7), the quick heating test indicated the slight defect. The coating pattern 7 is a case where the ratio of Sa in the area of the bonding layer 12 is 0.25 or 0.75, and it has been found that the crack cannot be controlled on these conditions.

Moreover, Comparative Examples 1 and 2 in which the bonding layer 12 was not provided with the zone a 12a or the zone b 12b were defective in the quick heating test, and it was indicated that the crack could not be controlled.

Example 4 (the coating pattern 10), Example 7 (the coating pattern 13), Example 10 (the coating pattern 9), Example 11 (the coating pattern 10) and Example 14 (the coating pattern 13) were excellent in the quick heating test, and it was confirmed that any crack was not generated. As described above, it has been found that an optimum pattern as the coating pattern of the joining material is a pattern in which the material is divided into eight equal portions vertically to the long side and in which the zones a 12a and b 12b are alternately repeatedly arranged.

The joining material No. 2 is better than No. 1. When the coating pattern 10 or 13 is used as the coating pattern of the joining material, the joined body 1 can be obtained in which the crack does not easily progress and in which the broken portion is controlled.

Industrial Applicability

In the present invention, a broken portion can be controlled, whereby the present invention can be utilized as a diesel exhaust gas purification filter which has a durability more excellent than that of a conventional filter. Even when soot is accumulated in the filter, the filter can be fired, regenerated and reused.

**Claims**

1. A joined body comprising: a first joining target (11) in the form of a honeycomb segment; a second joining target (12) in the form of a honeycomb segment; and a bonding layer (12) which is disposed between the first joining target and the second joining target to join the first joining target and the second joining target,
   wherein the bonding layer (12) includes a zone a in which a porosity on the side of the first joining target is higher than a porosity on the side of the second joining target in a thickness direction, and a zone b in which a porosity on the side of the second joining target is higher than a porosity on the side of the first joining target in the thickness direction, and the zone a and the zone b are obtainable by hardening a joining material composition containing inorganic particles and an inorganic adhesive as main components and by coating a bonding interface of one of the first joining target and a second joining target with a hardening accelerator which accelerates the hardening of a joining material composition, to form the zone a and the zone b, and
the zone a and the zone b are arranged and formed in a direction perpendicular to the thickness direction.

2. The joined body according to claim 1, wherein when the bonding layer has a thickness t, the bonding layer having a thickness of 0.5t from an interface between the first joining target and the bonding layer in the zone a is a bonding layer a$\alpha$, the bonding layer having a thickness of 0.5t from the bonding layer a$\alpha$ to the second joining target is a bonding layer a$\beta$,
the bonding layer having a thickness of 0.5t from an interface between the first joining target and the bonding layer in the zone b is a bonding layer b$\alpha$ and the bonding layer having a thickness of 0.5t from the bonding layer b$\alpha$ to the second joining target is a bonding layer b$\beta$,
the bonding layers of the zone a have a relation of $\varepsilon a1/\varepsilon a2 \geq 1.05$, in which $\varepsilon a1$ is the porosity of the bonding layer a$\alpha$ and $\varepsilon a2$ is the porosity of the bonding layer a$\beta$, and
the bonding layers of the zone b have a relation of $\varepsilon b1/\varepsilon b2 < 0.95$, in which $\varepsilon b1$ is the porosity of the bonding layer b$\alpha$ and $\varepsilon b2$ is the porosity of the bonding layer b$\beta$.

3. The joined body according to claim 1 or 2, wherein the bonding layer includes a zone c which does not have the characteristics of the zones a and b, and the zones of the bonding layer have a relation of:

$$0 \leq Sc/(Sa+Sb+Sc) < 0.8,$$

in which Sa, Sb and Sc are the areas of the bonding interfaces of the zones a, b and c.

4. The joined body according to claim 3, wherein the areas Sa and Sb of the bonding interfaces have a relation of $0.3 < Sa/(Sa+Sb) < 0.7$.

5. The joined body according to any one of claims 1 to 4, wherein the bonding layer is not constituted of only one of the zone a and the zone b but has a constitution including one or more combination sets, each set being constituted of the adjacent zones a and b.

6. The joined body according to any one of claims 1 to 4, wherein the zone a and the zone b are repeatedly arranged in the bonding layer.

7. The joined body according to claim 6, wherein the zone a and the zone b in the bonding layer include a repeated arrangement in which the zones are repeated in a direction perpendicular to the long-side direction of the bonding interface.

8. The joined body according to claim 6 or 7, wherein the zone a and the zone b in the bonding layer include a repeated arrangement in which the zones are repeated in a direction parallel to the long-side direction of the bonding interface.

9. The joined body according to any one of claims 6 to 8, wherein the zone a and the zone b in the bonding layer include a checkered-pattern-like repeated arrangement.

10. The joined body according to any one of claims 6 to 8, wherein when the zone a and the zone b are repeatedly arranged, the width of the repeating direction of the zone a and the zone b is 1/3 or less of the short side of the bonding interface.

11. The joined body according to claim 9, wherein in the repeated arrangement constituting the checkered pattern, the length of one side of each of the zone a and the zone b is 1/3 or less of the short side of the bonding interface.

12. The joined body according to any one of claims 1 to 12, wherein the inorganic particles contain at least one of plate-like particles and fibrous particles.

13. The joined body according to any one of claims 1 to 12, wherein the inorganic adhesive contains colloidal silica.

14. A manufacturing method of the joined body according to any one of claims 1 to 13, comprising the steps of: beforehand coating the bonding interface of one of the first joining target and the second joining target with said hardening accelerator which accelerates the hardening of the joining material composition, to form the zone a and the zone b.

15. The manufacturing method of the joined body according to claim 14, wherein to form the zone a, a part of the bonding interface of the second joining target is coated with a pH regulator as the hardening accelerator, and to form the zone b, a part of the bonding interface of the first joining target is coated with the pH regulator as the hardening accelerator.

**Patentansprüche**

1. Verbundener Körper, umfassend: ein erstes Verbindungsziel (11) in Form eines Wabensegments; ein zweites Verbindungsziel (12) in Form eines Wabensegments; und eine Haftschicht (12), die zwischen dem ersten Verbindungsziel und dem zweiten Verbindungsziel angeordnet ist, um das erste Verbindungsziel und das zweite Verbindungsziel miteinander zu verbinden,
worin die Haftschicht (12) einen Bereich a, in dem die Porosität auf der Seite des ersten Verbindungsziels höher ist als die Porosität auf der Seite des zweiten Verbindungsziels in Dickenrichtung, und einen Bereich b umfasst, in dem die Porosität auf der Seite des zweiten Verbindungsziels höher ist als die Porosität auf der Seite des ersten Verbindungsziels in Dickenrichtung, und der Bereich A und der Bereich B erhalten werden, indem eine Verbindungsmaterialzusammensetzung, die anorganische Partikel und ein anorganisches Haftmittel als Hauptkomponenten umfasst, erhärtet und eine Haftgrenzfläche auf einem des ersten Verbindungsziels und des zweiten Verbindungsziels mit einem Erhärtungsbeschleuniger beschichtet wird, der die Erhärtung einer Verbindungsmaterialzusammensetzung beschleunigt, um den Bereich a und den Bereich b auszubilden, und
worin der Bereich a und der Bereich b in einer Richtung senkrecht zur Dickenrichtung angeordnet und ausgebildet sind.

2. Verbundener Körper nach Anspruch 1, worin wenn die Haftschicht eine Dicke t aufweist, die Haftschicht mit einer Dicke von 0,5t von einer Grenzfläche zwischen dem ersten Verbindungsziel und der Haftschicht in dem Bereich a eine Haftschicht $a\alpha$ ist, und die Haftschicht mit einer Dicke von 0,5t von der Haftschicht $a\alpha$ bis zum zweiten Verbindungsziel eine Haftschicht $a\beta$ ist,
worin die Haftschicht mit einer Dicke von 0,5t von einer Grenzfläche zwischen dem ersten Verbindungsziel und der Haftschicht im Bereich b eine Haftschicht $b\alpha$ ist und die Haftschicht mit einer Dicke von 0,5t von der Haftschicht $b\alpha$ bis zum zweiten Verbindungsziel eine Haftschicht $b\beta$ ist,
worin die Haftschichten des Bereichs a ein Verhältnis von $\varepsilon a1/\varepsilon a2 \geq 1,05$ aufweisen, wobei $\varepsilon a1$ die Porosität der Haftschicht $a\alpha$ und $\varepsilon a2$ die Porosität der Haftschicht $a\beta$ ist, und
worin die Haftschichten des Bereichs b ein Verhältnis von $\varepsilon b1/\varepsilon b2 < 0,95$ aufweisen, wobei $\varepsilon b1$ die Porosität der Haftschicht $b\alpha$ und $\varepsilon b2$ die Porosität der Haftschicht $b\beta$ ist.

3. Verbundener Körper nach Anspruch 1 oder 2, worin die Haftschicht einen Bereich C umfasst, der nicht die Eigenschaften des Bereichs a und des Bereichs b aufweist, und die Bereiche der Haftschicht folgendes Verhältnis aufweisen:

$$0 \leq Sc/(Sa+Sb+Sc) < 0,8,$$

wobei Sa, Sb und Sc Flächen der Haftgrenzflächen der Bereiche a, b und c sind.

4. Verbundener Körper nach Anspruch 3, worin die Flächen Sa und Sb der Haftgrenzflächen ein Verhältnis von $0,3 < Sa/(Sa+Sb) < 0,7$ aufweisen.

5. Verbundener Körper nach einem der Ansprüche 1 bis 4, worin die Haftschicht nicht nur aus einem aus dem Bereich a und dem Bereich b zusammengesetzt ist, sondern eine Zusammensetzung aufweist, die eine oder mehrere Kombinationsgruppen umfasst, wobei jede Gruppe aus den benachbarten Bereichen a und b zusammengesetzt ist.

6. Verbundener Körper nach einem der Ansprüche 1 bis 4, worin der Bereich a und der Bereich b mehrmalig in der Haftschicht angeordnet sind.

7.  Verbundener Körper nach Anspruch 6, worin der Bereich a und der Bereich b in der Haftschicht eine mehrmalige Anordnung umfassen, wobei die Bereiche in einer Richtung senkrecht zur Längsrichtung der Haftgrenzflächen mehrmalig angeordnet sind.

8.  Verbundener Körper nach Anspruch 6 oder 7, worin der Bereich a und der Bereich b in der Haftschicht eine mehrmalige Anordnung umfassen, wobei die Bereiche in einer Richtung parallel zur Längsrichtung der Haftgrenzflächen mehrmalig angeordnet sind.

9.  Verbundener Körper nach einem der Ansprüche 6 bis 8, worin der Bereich a und der Bereich b in der Haftschicht eine mehrmalige Anordnung mit schachbrettartigem Muster umfassen.

10. Verbundener Körper nach einem der Ansprüche 6 bis 8, worin wenn der Bereich a und der Bereich b mehrmalig angeordnet sind, die Breite der Wiederholungsrichtung des Bereichs a und des Bereichs b 1/3 oder weniger der kurzen Seite der Haftgrenzflächen beträgt.

11. Verbundener Körper nach Anspruch 9, worin in der mehrmaligen Anordnung, die das Schachbrettmuster bildet, die Länge einer Seite jedes Bereichs a und Bereichs b 1/3 oder weniger der kurzen Seite der Haftgrenzfläche beträgt.

12. Verbundener Körper nach einem der Ansprüche 1 bis 11, worin die anorganischen Partikel mindestens einen aus plattenartigen Partikeln und faserigen Partikeln umfassen.

13. Verbundener Körper nach einem der Ansprüche 1 bis 12, worin das anorganische Haftmittel kolloidale Kieselsäure enthält.

14. Verfahren zum Herstellen des verbundenen Körpers nach einem der Ansprüche 1 bis 13, das folgende Schritte umfasst: zunächst Beschichten der Bundegrenzfläche eines des ersten Verbindungsziels und des zweiten Verbindungsziels mit dem Erhärtungsbeschleuniger, der das Erhärten der Verbindungsmaterialzusammensetzung beschleunigt, um den Bereich a und den Bereich b auszubilden.

15. Verfahren zum Herstellen des verbundenen Körpers nach Anspruch 14, worin zum Ausbilden des Bereichs a ein Teil der Haftgrenzfläche des zweiten Verbindungsziels mit einem pH-Regler als Erhärtungsbeschleuniger beschichtet ist, und zum Ausbilden des Bereichs b ein Teil der Haftgrenzfläche des ersten Verbindungsziels mit dem pH-Regler als Erhärtungsbeschleuniger beschichtet ist.

**Revendications**

1.  Corps assemblé comprenant : une première cible de jonction (11) sous la forme d'un segment en nid d'abeilles ; une deuxième cible de jonction (12) sous la forme d'un segment en nid d'abeilles ; et une couche de liaison (12) qui est disposée entre la première cible de jonction et la deuxième cible de jonction pour joindre la première cible de jonction et la deuxième cible de jonction,
    dans lequel la couche de liaison (12) comprend une zone a dans laquelle une porosité du côté de la première cible de jonction est supérieure à une porosité du côté de la deuxième cible de jonction dans une direction d'épaisseur, et une zone b dans laquelle une porosité du côté de la deuxième cible de jonction est supérieure à une porosité du côté de la première cible de jonction dans la direction d'épaisseur, et la zone a et la zone b peuvent être obtenues en durcissant une composition de matériau de jonction contenant des particules inorganiques et un adhésif inorganique en tant que composants principaux et en revêtant une interface de liaison de l'une de la première cible de jonction et d'une deuxième cible de jonction avec un accélérateur de durcissement qui accélère le durcissement d'une composition de matériau de jonction, pour former la zone a et la zone b, et
    la zone a et la zone b sont agencées et formées dans une direction perpendiculaire à la direction d'épaisseur.

2.  Corps assemblé selon la revendication 1, dans lequel, lorsque la couche de liaison a une épaisseur t, la couche de liaison ayant une épaisseur de 0,5 t à partir d'une interface entre la première cible de jonction et la couche de liaison dans la zone a est une couche de liaison $a\alpha$, la couche de liaison ayant une épaisseur de 0,5 t de la couche de liaison $a\alpha$ à la deuxième cible de jonction est une couche de liaison $a\beta$,
    la couche de liaison ayant une épaisseur de 0,5 t à partir d'une interface entre la première cible de jonction et la couche de liaison dans la zone b est une couche de liaison $b\alpha$ et la couche de liaison ayant une épaisseur de 0,5 t de la couche de liaison $b\alpha$ à la deuxième cible de jonction est une couche de liaison $b\beta$,

les couches de liaison de la zone a ont une relation $\varepsilon a1/\varepsilon a2 \geq 1,05$, où $\varepsilon a1$ est la porosité de la couche de liaison $a\alpha$ et $\varepsilon a2$ est la porosité de la couche de liaison $a\beta$, et

les couches de liaison de la zone b ont une relation $\varepsilon b1/\varepsilon b2 < 0,95$, où $\varepsilon b1$ est la porosité de la couche de liaison $b\alpha$ et $\varepsilon b2$ est la porosité de la couche de liaison $b\beta$.

3. Corps assemblé selon la revendication 1 ou 2, dans lequel la couche de liaison comprend une zone c qui ne présente pas les caractéristiques des zones a et b, et les zones de la couche de liaison ont une relation :

$$0 \leq Sc/(Sa + Sb + Sc) < 0,8,$$

dans laquelle Sa, Sb et Sc sont les aires des interfaces de liaison des zones a, b et c.

4. Corps assemblé selon la revendication 3, dans lequel les aires Sa et Sb des interfaces de liaison ont une relation $0,3 < Sa/(Sa + Sb) < 0,7$.

5. Corps assemblé selon l'une quelconque des revendications 1 à 4, dans lequel la couche de liaison n'est pas constituée d'une seule de la zone a et de la zone b, mais a une constitution comprenant un ou plusieurs ensembles de combinaisons, chaque ensemble étant constitué des zones a et b adjacentes.

6. Corps assemblé selon l'une quelconque des revendications 1 à 4, dans lequel la zone a et la zone b sont agencées de manière répétée dans la couche de liaison.

7. Corps assemblé selon la revendication 6, dans lequel la zone a et la zone b dans la couche de liaison comprennent un agencement répété dans lequel les zones sont répétées dans une direction perpendiculaire à la direction de côté long de l'interface de liaison.

8. Corps assemblé selon la revendication 6 ou 7, dans lequel la zone a et la zone b dans la couche de liaison comprennent un agencement répété dans lequel les zones sont répétées dans une direction parallèle à la direction de côté long de l'interface de liaison.

9. Corps assemblé selon l'une quelconque des revendications 6 à 8, dans lequel la zone a et la zone b dans la couche de liaison comprennent un agencement répété de type à motif en damier.

10. Corps assemblé selon l'une quelconque des revendications 6 à 8, dans lequel, lorsque la zone a et la zone b sont agencées de manière répétée, la largeur de la direction de répétition de la zone a et de la zone b est égale à 1/3 ou moins du côté court de l'interface de liaison.

11. Corps assemblé selon la revendication 9, dans lequel, dans l'agencement répété constituant le motif en damier, la longueur d'un côté de chacune de la zone a et de la zone b est égale à 1/3 ou moins du côté court de l'interface de liaison.

12. Corps assemblé selon l'une quelconque des revendications 1 à 11, dans lequel les particules inorganiques contiennent au moins l'une de particules du type plaque et de particules fibreuses.

13. Corps assemblé selon l'une quelconque des revendications 1 à 12, dans lequel l'adhésif inorganique contient de la silice colloïdale.

14. Procédé de fabrication du corps assemblé selon l'une quelconque des revendications 1 à 13, comprenant les étapes : de revêtement à l'avance de l'interface de liaison de l'une de la première cible de jonction et de la deuxième cible de jonction avec ledit accélérateur de durcissement qui accélère le durcissement de la composition de matériau de jonction, pour former la zone a et la zone b.

15. Procédé de fabrication du corps assemblé selon la revendication 14, dans lequel, pour former la zone a, une partie de l'interface de liaison de la deuxième cible de jonction est revêtue d'un régulateur de pH en tant qu'accélérateur de durcissement, et pour former la zone b, une partie de l'interface de liaison de la première cible de jonction est revêtue du régulateur de pH en tant qu'accélérateur de durcissement.

FIG.1

10

12

11

THICKNESS
DIRECTION

12a
JUNCTION INTERFACE AREA : Sa

12b
JUNCTION INTERFACE AREA : Sb

12c
JUNCTION INTERFACE AREA : Sc

FIG.2

12a          12b          12c

10                                    24

12 { 0.5t  THICKNESS
     0.5t  DIRECTION

11                                    25

20      21      22      23

FIG.3

12b

12a

11

FIG.4

12a    12b

11

FIG.5

12a    12b

11

FIG.6

12a    12b

11

FIG.7

FIG.8

FIG.9

FIG.10

FIG.11

FIG.12

FIG.13

FIG.14

**EP 2 112 129 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001190916 A
- JP 2004188278 A
- JP 2006522267 A
- EP 1591431 A
- WO 2006098191 A